# EUROPÄISCHE PATENTSCHRIFT

(11) **EP 2 423 536 B1**
(45) Veröffentlichungstag und Bekanntmachung des Hinweises auf die Patenterteilung: **06.03.2013**
(21) Anmeldenummer: 10008845.9
(22) Anmeldetag: 25.08.2010
(51) Int. Cl.: F16H 7/08

(54) **Hydraulische Spannvorrichtung mit Zwischenspeicher**
Hydraulic tensioning device with temporary storage
Dispositif de serrage hydraulique doté d'un stockage temporaire

(43) Veröffentlichungstag der Anmeldung: 29.02.2012
(73) Patentinhaber: IWIS Motorsysteme GmbH & Co. KG, 81369 München (DE)
(72) Erfinder: Perissinotto, Renzo, 85221 Dachau (DE)
(74) Vertreter: Grünecker, Kinkeldey, Stockmair & Schwanhäusser

(56) Entgegenhaltungen:
- FR-A1- 2 516 620
- FR-A1- 2 937 703
- GB-A- 2 260 799
- GB-A- 2 420 393

## Beschreibung

Die vorliegende Erfindung betrifft eine hydraulische Spannvorrichtung für ein flexibles Antriebsmittel, insbesondere ein Kettenspanner für einen Verbrennungsmotor, mit einem Gehäuse, einem in einer Kolbenbohrung des Gehäuses geführten hohlzylindrischen Spannkolben, einem von der Kolbenbohrung und dem Spannkolben begrenzten Dämpfungsdruckraum, eine Hydraulikmittelversorgung, die an einem externen Hydraulikmittelkreis anschließbar ist, einen zwischen der Hydraulikmittelversorgung und dem Dämpfungsdruckraum angeordneten ersten Rückschlagventil, das in Richtung des Dämpfungsdruckraums öffnet, und eine Entlüftungseinrichtung.

Hydraulische Spannvorrichtungen sind weit verbreitet und werden insbesondere als Kettenspanner in Verbrennungsmotoren eingesetzt. Dabei werden sie üblicherweise im Leertrum der Kettentriebe angeordnet, da dort während des Betriebs geringere Spannkräfte auftreten. Hydraulische Spannvorrichtungen umfassen in aller Regel ein Gehäuse mit einer Kolbenbohrung, in der ein mittels einer Druckfeder vorgespannter Spannkolben angeordnet ist. Der hohlzylindrische Spannkolben bildet mit der Kolbenbohrung des Gehäuses einen Druckraum aus, der zur Dämpfung der Einfahrbewegung des Spannkolbens mit einem Hydraulikmittel gefüllt ist. Der Druckraum steht wiederum über ein Rückschlagventil mit einem Hydraulikkreislauf, z. B. dem Motorölkreis des Verbrennungsmotors, in Verbindung, um das aus dem Druckraum entweichende Hydraulikmittel zu ersetzen, das über einen zwischen dem Kolben und dem Spannergehäuse vorhandenen Leckspalt oder über eine entsprechende Entlüftungseinrichtung, z.B. eine Entlüftungsbohrung im Spannkolben, aus dem Druckraum austritt. Eine derartige gattungsgemäße Spannvorrichtung mit einer kontinuierlichen Hydraulikmittelversorgung des Druckraums zur Kompensation des Leckagestroms ist aus der DE 3 145 115 A1 bekannt.

Beim Einfahren des Spannkolbens in die Kolbenbohrung des Gehäuses wird im Betrieb das Hydraulikmittel im Druckraum zwischen Spannkolben und Kolbenbohrung komprimiert und unter einen hohen Druck gesetzt, wodurch die Einfahrbewegung des Spannkolbens gedämpft wird. Der erhöhte Druck im Druckraum führt dabei dazu, dass das Hydraulikmittel verstärkt über den Leckspalt zwischen Gehäuse und Kolben oder über den die Entlüftungsbohrung im Spannkolben an die Umgebung entweicht. Zur Einstellung der Dämpfungswirkung der Spannvorrichtung wird die Spaltbreite bzw. der Kanaldurchmesser der Entlüftungsbohrung gezielt ausgelegt und gegebenenfalls mit Drosselelementen versehen. Dabei sollen die Drosselelemente den Verlust von Hydraulikmittel insbesondere bei kleinen Bewegungshüben des Spannkolbens bzw. bei einer leichten Dämpfung der Einfahrbewegung des Spannkolbens verringern.

Die bei der Dämpfung der Einfahrbewegung ausgetretene Menge an Hydraulikmittel wird bei der folgenden Ausfahrbewegung des Spannkolbens aus dem angeschlossenen Hydrauliksystem ersetzt. Dazu öffnet das Rückschlagventil bei einem bestimmten Druck im Druckraum, der unter dem Druck des Hydrauliksystems liegt und ermöglicht das Zuströmen von Hydraulikmittel aus dem Hydraulikkreislauf in den Druckraum. Bei geringen Druckdifferenzen zwischen dem Druckraum und dem Hydraulikkreislauf kann sich das Nachströmen des Hydraulikmittels verzögern, so dass bei einer folgenden Einrückbewegung keine optimale Dämpfung des Spannkolbens möglich ist. Darüber hinaus gibt es gerade bei dynamisch hoch belasteten Spannvorrichtungen durch den schnellen Wechsel zwischen Einfahr- und Ausrückbewegung des Spannkolbens, entsprechend einem schnellen Druckwechsel im Dämpfungsdruckraum, Probleme beim Nachströmen einer ausreichenden Menge an Hydraulikmittel. Ein weiterer Nachteil dynamisch belasteter Spannvorrichtungen mit einer kontinuierlichen Hydraulikmittelversorgung ist der hohe Verbrauch des Hydraulikmittels durch die Dämpfungsfunktion der Spannvorrichtung.

Hydraulische Spannvorrichtungen zum Spannen von flexiblen Antriebsmitteln sind insbesondere für Verbrennungsmotoren weit verbreitet und haben sich im Einsatz gut bewährt. Bedingt durch ihre Dämpfungsfunktion und die notwendige kontinuierliche Versorgung mit einem Hydraulikmittel gibt es im Betrieb verschiedene Nachteile, die im Stand der Technik durch eine individuelle Abstimmung der Komponenten der Hydraulikversorgung und Dämpfung des Spannkolbens oder durch speziell ausgebildete Bauteile reduziert werden, ohne die Probleme im Bereich der Dämpfung des Spannkolbens und der Hydraulikmittelversorgung des Druckraums zu beheben.

Darüber hinaus besteht insbesondere im Bereich der Automobilindustrie ein starker Innovationsdruck, der sich in kontinuierlichen Bestrebungen zur Verbesserung und Optimierung von Bauteilen sowie ihrer Einbindung in immer kompliziertere Verbrennungsmotoren äußert. Da solche hydraulischen Spannvorrichtungen oftmals im ganzen Motorreihen eingesetzt werden, sind sie im Hinblick auf die hohen Stückzahlen in der Produktion Massenprodukte, bei denen ständig die Notwendigkeit besteht, die Konstruktion zu verbessern und auch kleine Innovationen umzusetzen.

Der vorliegenden Erfindung liegt daher die Aufgabe zugrunde, eine gattungsgemäße hydraulische Spannvorrichtung für ein flexibles Antriebsmittel mit einer verbesserten hydraulischen Dämpfungsfunktion bereitzustellen.

Diese Aufgabe wird erfindungsgemäß dadurch gelöst, dass zwischen dem Dämpfungsdruckraum und der Entlüftungseinrichtung ein Zwischenspeicherraum vorgesehen ist und ein zweites Rückschlagventil zwischen dem Dämpfungsdruckraum und dem Zwischenspeicherraum angeordnet ist, das in Richtung des Dämpfungsdruckraums öffnet, wobei der Zwischenspeicherraum weiter mittels einer hydraulischen Verbindung mit dem Dämpfungsdruckraum verbunden ist.

Die erfindungsgemäße Ausgestaltung einer hydraulischen Spannvorrichtung mit einem kontinuierlich über eine Hydraulikmittelversorgung sowie zusätzlich über einen Zwischenspeicherraum versorgten Dämpfungsdruckraum ermöglicht eine sehr schnelle Auffüllung des Dämpfungsdruckraums mit Hydraulikmittel, so dass auch bei dynamisch hoch belasteten Spannvorrichtungen immer genügend Hydraulikmittel für eine sichere Dämpfung des Spannkolbens bereitsteht. Der zwischen dem Dämpfungsdruckraum und der Entlüftungseinrichtung zum Abführen des bei der Dämpfung der Einfahrbewegung aus dem Druckraum entweichenden Hydraulikmittels vorgesehene Zwischenspeicherraum für das entweichende Hydraulikmittel verhindert, dass die für die hydraulische Dämpfung benötigte Menge des Hydraulikmittels direkt nach dem Dämpfungsvorgang verloren geht. Stattdessen wird diese Menge des Hydraulikmittels über die hydraulische Verbindung zwischen dem Dämpfungsdruckraum und dem Zwischenspeicherraum in diesen Zwischenspeicher verlagert. Aus dem Zwischenspeicherraum kann zumindest ein Teil der Menge des bei zur Dämpfung verdrängten Hydraulikmittels über das zweite Rückschlagventil bei der nächsten Ausrückbewegung des Spannkolbens und der damit einhergehenden Volumenvergrößerung und Druckreduzierung des Dämpfungsdruckraums wieder in den Dämpfungsdruckraum zurückströmen und erneut zur Dämpfung verwendet werden. Dies ermöglicht einen reduzierten Bedarf an neuem Hydraulikmittel, das über den Hydraulikmittelanschluss und dem Versorgungskanal der Hydraulikmittelversorgung sowie dem ersten Rückschlagventil, dem Dämpfungsdruckraum zuströmt.

Bedingt durch den bei einer Einfahrbewegung des Spannkolbens in die Kolbenbohrung erhöhten Druck des Hydraulikmittels im Dämpfungsdruckraum strömt das verbrauchte Hydraulikmittel über die hydraulische Verbindung in den Zwischenspeicherraum, wobei sich der Druck im Zwischenspeicherraum dem Druck im Dämpfungsdruckraum annähert. Die hydraulische Verbindung zwischen dem Dämpfungsdruckraum und dem Zwischenspeicherraum ist ein zumindest während der Einfahrbewegung temporär offener Strömungskanal mit einem vorbestimmten Querschnitt und einer bestimmten Dämpfung der in Abhängigkeit der Bewegung des Spannkolbens im Betrieb eine effektive Dämpfung des Spannkolbens durch den Dämpfungsdruckraum sicherstellt und darüber hinaus auch die Funktion des zweiten Rückschlagventils nicht oder nur gering beeinflusst. Bei einer anschließenden Ausrückbewegung des Spannkolbens vergrößert sich dann das Volumen des Dämpfungsdruckraums wieder, so dass der Druck des sich darin befindlichen Hydraulikmittels unter den Druck des Zwischenspeicherraums, bzw. auch unter den Druck des Hydraulikmittelkreises, sinkt. Je nach der Druckverzögerung des zweiten Rückschlagventils strömt dann das Hydraulikmittel aus dem Zwischenspeicherraum über das zweite Rückschlagventil zurück in den Dämpfungsdruckraum, wobei in Abhängigkeit des Öffnungsquerschnitts des Rückschlagventils und des Strömungsquerschnitts der hydraulischen Verbindung ein Teil des Volumenstroms auch über die hydraulische Verbindung zurück in den Dämpfungsdruckraum gelangen kann.

Durch die erfindungsgemäße Ausgestaltung der Spannvorrichtung wird der Verbrauch des Hydraulikmittels bei der Dämpfung des Spannkolbens reduziert, ohne jedoch die maximale Ölmenge für eine sichere Dämpfungsfunktion der Spannvorrichtung zu beschränken. In Abhängigkeit der dynamischen Bewegung des Spannkolbens wird nach oder gleichzeitig mit dem Einströmen des Hydraulikmittels über das zweite Rückschlagventil aus dem Zwischenspeicherraum auch ergänzend Hydraulikmittel über die Hydraulikmittelversorgung und das erste Rückschlagventil aus dem Hydraulikkreis dem Druckraum zugeführt, um in einer der dynamischen Bewegung des Spannkolbens entsprechenden kurzen Zeit den Dämpfungsdruckraum ausreichend mit unter Druck stehendem Hydraulikmittel zu füllen.

Eine bevorzugte Ausführungsform sieht vor, dass die hydraulische Verbindung zwischen dem Dämpfungsdruckraum und dem Zwischenspeicherraum als ein Bypass zum zweiten Rückschlagventil ausgebildet ist. Ein derartiger Bypass kann als Bohrung oder offener Kanal integriert im zweiten Rückschlagventil oder parallel dazu verlaufend den Dämpfungsdruckraum bei einer Einfahrbewegung des Kolbens sicher entlasten und dabei den Zwischenspeicherraum mit dem entweichenden Hydraulikmittel befüllen. Darüber hinaus sind der Querschnitt und die Dämpfungseigenschaften eines Bypasses leicht einstellbar, um dadurch die Dämpfungsfunktion der Spannvorrichtung zu bestimmen. Günstigerweise kann die Entlüftungseinrichtung als Entlüftungsbohrung im spannseitigen Ende des hohlzylindrischen Spannkolbens ausgebildet sein und der Zwischenspeicherraum im spannseitigen Ende des hohlzylindrischen Spannkolbens angeordnet sein. Diese Anordnung ermöglicht eine einfache Konstruktion der Entlüftungseinrichtung und des Zwischenspeicherraums, da die Entlüftungsbohrung direkt im Spannkolben vorgesehen sein kann und die meisten Begrenzungsflächen des Zwischenspeicherraums inhärent durch den hohlzylindrischen Spannkolben gebildet werden. Bevorzugt kann dabei zwischen dem Zwischenspeicherraum im spannseitigen Ende des hohlzylindrischen Spannkolbens und dem Dämpfungsdruckraum im Spannkolben ein Sitz zum Aufnehmen des zweiten Rückschlagventils vorgesehen sein. Die Ausbildung eines Sitzes für das zweite Rückschlagventil in der Wandung des hohlzylindrischen Spannkolbens ist eine konstruktiv einfache und kostengünstige Lösung zur Anordnung des Rückschlagventils, das dabei gleichzeitig auch einen Teil der Wandung des Zwischenspeicherraums bereitstellen kann.

In einer weiteren konstruktiv einfachen und kostengünstigen Ausgestaltung der Spannvorrichtung kann im Boden der Kolbenbohrung des Gehäuses ein Sitz zum Aufnehmen des ersten Rückschlagventils vorgesehen sein. Auch hierbei grenzt das erste Rückschlagventil verschiedene Bauteile der Spannvorrichtung voneinander ab, so dass der Dämpfungsdruckraum von dem Versorgungskanal bzw. Versorgungsraum der Hydraulikmittelversorgung durch das erste Rückschlagventil konstruktiv getrennt sind, aber gleichzeitig funktional miteinander verbunden bleiben.

Eine besondere Ausbildung der erfindungsgemäßen Spannvorrichtung sieht vor, dass zum Vorspannen des Spannkolbens eine Druckfeder vorgesehen ist, die zumindest teilweise im hohlzylindrischen Spannkolben angeordnet ist, wobei die Druckfeder das erste Rückschlagventil gegen den Sitz im Gehäuse drückt und/oder das zweite Rückschlagventil gegen den Sitz im Spannkolben drückt. Die zum Vorspannen des Spannkolbens notwendige im Dämpfungsdruckraum angeordnete Druckfeder sichert somit gleichzeitig auch den sicheren Sitz des ersten Rückschlagventils und/oder des zweiten Rückschlagventils in ihren jeweiligen Sitzen und vermeidet so zusätzliche Arretierungselemente.

Für eine einfache Konstruktion des Spannkolbens und eine sichere Abführung des verbrauchten Hydraulikmittels aus der Entlüftungseinrichtung kann die Entlüftungsbohrung stirnseitig am spannseitigen Ende des Spannkolbens angeordnet sein. Vorteilhafterweise kann im Spannkolben vor der Entlüftungsbohrung eine Leckstrombegrenzung vorgesehen sein, die das Austreten des Hydraulikmittels aus dem Zwischenspeicherraum dämpft und minimiert, um so einen möglichst hohen Teil des aus dem Druckraum zur Dämpfung des Spannkolbens entweichenden Hydraulikmittels im Zwischenspeicherraum zu halten und einer erneuten Verwendung im Dämpfungsdruckraum wieder zuführen zu können.

Zur Begrenzung oder wesentlichen Reduzierung eines Leckagestroms des Hydraulikmittels zwischen dem Spannkolben und der Kolbenbohrung des Gehäuses kann zwischen dem Spannkolben und der Kolbenbohrung des Gehäuses eine Hydraulikmitteldichtung, z.B. eine Kolbendichtung, vorgesehen sein. Die Vermeidung einer zusätzlichen Leckage von Hydraulikmittel aus dem Dämpfungsdruckraum erhöht die zur erneuten Verwendung zur Verfügung stehenden Menge des Hydraulikmittels im Dämpfungsdruckraum. Dabei sollte der Leckagestrom des Hydraulikmittels zumindest kleiner als der Hydraulikmittelstrom über die Entlüftungseinrichtung sein, um eine sichere Funktion der Dämpfung der erfindungsgemäßen Spannvorrichtung zu gewährleisten.

Eine günstige Ausführungsform sieht vor, dass die Hydraulikmittelversorgung einen Anschluss zu dem externen Hydraulikmittelkreis und einen Hydraulikmittelkanal oder Hydraulikmittelraum zur Verbindung des Anschlusses mit dem ersten Rückschlagventil aufweist. Eine derart schlichte Ausgestaltung der Hydraulikmittelversorgung als reiner Hydraulikmittelkanal oder begrenzter Hydraulikmittelraum, die über einen oder mehrere Anschlüsse an einen externen Hydraulikmittelkreis anschließbar sind, ermöglicht einen konstruktiv einfachen Aufbau des Gehäuses der Spannvorrichtung und damit auch eine kostengünstige Herstellung.

Eine vorteilhafte Ausgestaltung sieht vor, dass die Spannvorrichtung als ein Einschraubspanner ausgebildet ist, wobei das Gehäuse am Außenumfang ein Gewinde zum Montieren der Spannvorrichtung aufweist. Durch den einfachen Aufbau der erfindungsgemäßen Spannvorrichtung ist diese besonders als ein Schraubspanner geeignet, der mittels dem am Außenumfang des Gehäuses vorgesehenen Gewinde in einer entsprechenden Bohrung, beispielsweise im Motorblock eines Verbrennungsmotors, in seine Betriebsposition bringbar ist. Darüber hinaus ist die erfindungsgemäße hydraulische Spannvorrichtung in gleicher Weise auch als Flansch-Spanner ausführbar. Dabei ermöglicht insbesondere eine Ausbildung als Flansch-Spanner weitere Möglichkeiten zur Positionierung des Zwischenspeichers und der Entlüftungseinrichtung, die bei einem Flansch-Spanner in einfacher Weise auch im Gehäuse ausgebildet sein können.

Im Folgenden wird der Aufbau und die Funktion der erfindungsgemäßen Spannvorrichtung mit Bezug auf die beigefügten Zeichnungen anhand eines Ausführungsbeispiels näher erläutert. Es zeigen:
- Fig. 1: eine perspektivische Querschnittsansicht einer erfindungsgemäßen hydraulischen Spannvorrichtung,
- Fig. 2a: die Spannvorrichtung aus Fig. 1 in einem belasteten Zustand und
- Fig. 2b: die Spannvorrichtung aus Fig. 1 in einem entlasteten Zustand.

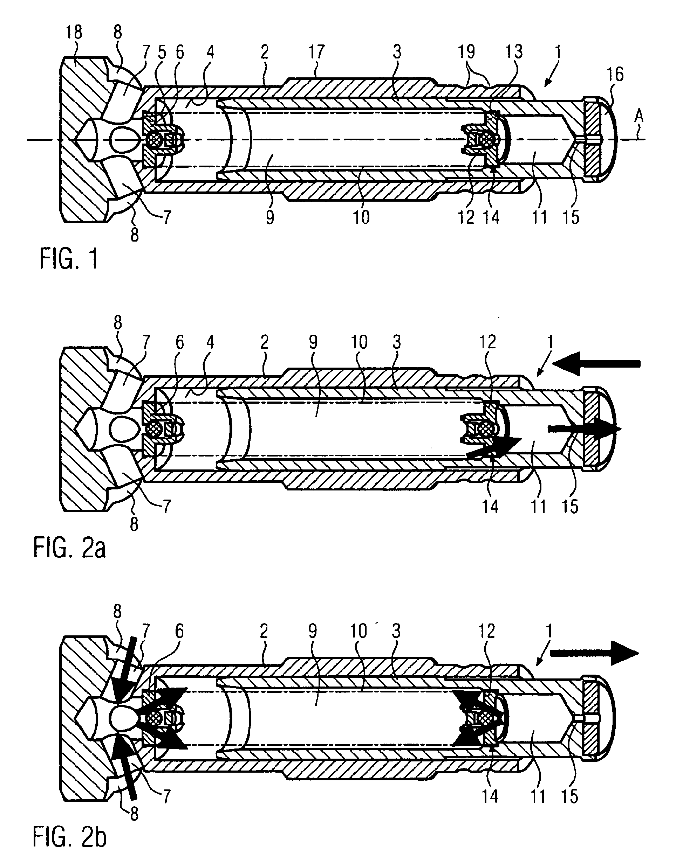

Fig. 1 zeigt eine erfindungsgemäße Spannvorrichtung 1 mit einem hohlzylindrischen Gehäuse 2 und einem ebenfalls hohlzylindrisch ausgebildeten Spannkolben 3. In dem hohlzylindrischen Teil des Gehäuses 2 ist eine Kolbenbohrung 4 vorgesehen, in der der Spannkolben 3 längsbeweglich zur Achse A geführt ist. Am Boden der Kolbenbohrung 4 sind ein Sitz 5 zur Aufnahme des ersten Rückschlagventils 6 sowie mehrere Kanäle 7 und Anschlüsse 8 zu einem nicht dargestellten Hydrauliksystem, bevorzugt dem Ölkreislauf eines Verbrennungsmotors vorgesehen, um das Hydraulikmittel zum ersten Rückschlagventil 6 zu leiten. Die Kolbenbohrung 4 des Gehäuses 2 bildet zusammen mit dem Spannkolben 3 gemeinsam einen Dämpfungsdruckraum 9 aus. Der Druckraum 9 ist über das erste Rückschlagventil 6 sowie die Fluidkanäle 7 und Anschlüsse 8 mit dem Hydrauliksystem verbunden. Über das in Richtung des Dämpfungsdruckraums 9 offenen Rückschlagventil 6 ist der Dämpfungsdruckraum 9 mit Hydraulikmittel gefüllt. Darüber hinaus ist im Druckraum 9 eine schraubenförmige Druckfeder 10 angeordnet, die den Spannkolben 3 in Richtung der Achse A vorspannt. Dabei ist die Druckfeder 10 in den Figuren nur schematisch dargestellt. Gleichzeitig drückt die Druckfeder 10 das Rückschlagventil 6 fest in den Sitz 5 am Boden der Kolbenbohrung 4.

Im hohlzylindrischen Spannkolben 3 ist am spannseitigen geschlossenen Ende des Hohlzylinders ein Zwischenspeicherraum 11 vorgesehen, der gegenüber dem Dämpfungsdruckraum 9 durch ein zweites Rückschlagventil 12 abgegrenzt ist. Das zweite Rückschlagventil 12 ist in Richtung des Dämpfungsdruckraums 9 offen und ist in einem Sitz 13 in der Innenwandung des hohlzylindrischen Spannkolbens 3 positioniert. Dabei wird auch das zweite Rückschlagventil 12 durch die Druckfeder 10 in den zugehörigen Sitz 13 im Spannkolben 3 gedrückt. Sowohl das erste Rückschlagventil 6 als auch das zweite Rückschlagventil 12 sind als herkömmliche federbelastete Kugel-Rückschlagventile ausgebildet, jedoch können alternativ auch funktional anders wirkende Rückschlagventile eingesetzt werden. Zwischen dem zweiten Rückschlagventil 12 und der Wandung des Spannkolbens 3 ist ein Bypass 14 vorgesehen, durch den Hydraulikmittel aus dem Dämpfungsdruckraum 9 in den Zwischenspeicherraum 11 strömen kann. Der Bypass 14 kann dabei sowohl im Rückschlagventil 12 als auch im Sitz 13 des Spannkolbens 3 ausgebildet sein. Alternativ kann der Bypass auch als Bohrung oder offener Kanal im zweiten Rückschlagventil 12 bzw. in der Wandung des Spannkolbens 3 ausgebildet sein. Am stirnseitigen Ende des Zwischenspeicherraums 11, dem geschlossenen Ende des hohlzylindrischen Spannkolbens 3, ist eine Entlüftungsbohrung 15 vorgesehen, durch die das Hydraulikmittel aus dem Zwischenspeicherraum 11 austreten kann. An der Außenseite des Spannkolbens 3 ist stirnseitig ein gelochtes Druckstück 16 vorgesehen, das in einer stirnseitigen Vertiefung außen am Spannkolben 3 positioniert ist. Das Druckstück 16 ermöglicht ein gutes Andrückverhalten des Spannkolbens 3 an ein zugehöriges Spannmittel (nicht gezeigt) und ermöglicht so eine sichere Kraftübertragung. Das Loch in der Mitte des Druckstücks 16 sichert ein ungehindertes Ablaufen des aus der Entlüftungsbohrung 15 austretenden Hydraulikmittels.

Das Gehäuse 2 weist an seinem Außenumfang weiter einen Gewindeabschnitt 17 sowie im Fußbereich des hohlzylindrischen Gehäuses 3 einen Flansch 18 auf. Mit dem Gewindeabschnitt 17 kann die Spannvorrichtung 1 im Motorblock eines Verbrennungsmotors montiert werden, wobei der Flansch 18 das Einschrauben der Spannvorrichtung 1 begrenzt. Alternativ kann das Gehäuse 2 bzw. die Spannvorrichtung 1 auch mit einem Flanschgehäuse bzw. als Flansch-Spannvorrichtung ausgeführt sein. Am Spannende des Gehäuses 2, d.h. an der offenen Stirnseite des hohlzylindrischen Gehäuses 2 sind zusätzlich zu der herkömmlichen Ausgestaltung des Gehäuses 2 am Außenumfang zwei Nuten 19 vorgesehen, die zur Aufnahme einer von außen auf den Spannkolben 3 wirkenden Blockiereinrichtung geeignet sind. Zwischen der Außenwandung des Spannkolbens 3 sowie der Kolbenbohrung 4 des Gehäuses 2 kann optional eine zusätzliche Spaltdichtung vorgesehen sein, um einen über den Spalt zwischen Spannkolben 3 und Kolbenbohrung 4 entweichenden Leckstrom des Hydraulikmittels zu verhindern, bzw. zu minimieren.

Im Folgenden wird die Funktionsweise der erfindungsgemäßen hydraulischen Spannvorrichtung 1 anhand der Figuren 2a und 2b näher erläutert.

Bei der in Fig. 2a durch den äußeren Druckpfeil angedeuteten Einfahrbewegung des Spannkolbens in Richtung der Achse A reduziert sich das Volumen des Dämpfungsdruckraums 9, wodurch sich der Druck des in dem Dämpfungsdruckraums 9 befindlichen Hydraulikmittels erhöht. Der erhöhte Druck des Hydraulikmittels im Dämpfungsdruckraum 9 drückt die Ventilmittel des ersten Rückschlagventils 6 und des zweiten Rückschlagventils 12, hier Ventilkugeln, in die zugehörigen Ventilsitze und dichtet den Dämpfungsdruckraum 9 sicher gegenüber der Hydraulikmittelversorgung über die Hydraulikanschlüsse 8 und Fluidkanäle 7 sowie partiell gegenüber dem Zwischenspeicherraum 11 ab. Das durch die Einfahrbewegung des Spannkolbens 3 in die Kolbenbohrung 4 unter Druck stehende Hydraulikmittel im Dämpfungsdruckraum 9 strömt wie durch die Strömungspfeile in Fig. 2a dargestellt über den Bypass 14 am geschlossenen zweiten Rückschlagventil 12 vorbei in den Zwischenspeicherraum 11 und zum Teil von dort über die Entlüftungsbohrung 15 und das Loch im Druckstück 16 nach außen. Dabei bestimmt der Querschnitt des Bypasses 14 den Volumenstrom zwischen dem Dämpfungdruckraum 9 und dem Zwischenspeicherraum 11, der sich bei einer Druckerhöhung im Dämpfungsdruckraum gegenüber dem Zwischenspeicherraum 11 bei einer Einfahrbewegung des Spannkolbens 3 in die Kolbenbohrung des Gehäuses 2 einstellt. Folglich bestimmt der Bypass 14 im Wesentlichen die hydraulische Dämpfungswirkung der Spannvorrichtung 1. Durch den Hydraulikmittelzustrom aus dem Dämpfungsdruckraum 9 über den Bypass 14 erhöht sich auch der Druck des Hydraulikmittels im Zwischenspeicherraum 11, da das Volumen des Zwischenspeicherraums 11 unabhängig vom Betriebszustand konstant ist. Bevorzugt ist das Volumen des Zwischenspeicherraums 11 so ausgelegt, dass der Zwischenspeicherraum 11 die bei der Dämpfung der Einfahrbewegung des Spannkolbens 3 aus dem Dämpfungsdruckraum 9 über den Bypass 14 herausgedrückte Menge des Hydraulikmittels aufnehmen kann.

Aus dem Zwischenspeicherraum 11 strömt das Hydraulikmittel in Abhängigkeit des Querschnitts der Entlüftungsbohrung 15 sowie der Druckdifferenz zwischen Zwischenspeicherraum 11 und Umgebung der Spannvorrichtung 1 durch die Entlüftungsbohrung 15 als Leckstrom nach außen. Da der Leckstrom lediglich durch den Querschnitt des Bypasses 15 sowie der Druckdifferenz zwischen Zwischenspeicherraum 11 und der Umgebung bestimmt wird, hat er in einer erfindungsgemäßen Ausgestaltung einer hydraulischen Spannvorrichtung 1 nur eine indirekte geringe Wirkung auf die Dämpfungsfunktion der Spannvorrichtung 1 über die Änderung des Drucks des Hydraulikmittels im Zwischenspeicherraum 11 und die sich daraus ergebende Menge des während des Dämpfungsvorgangs einströmenden Hydraulikmittels. Bei einer anschließenden in Fig. 2b durch den äußeren Druckpfeil angedeuteten Ausrückbewegung des Spannkolbens 3, bedingt durch den nachlassenden Druck des Antriebsmittels auf den Spannkolben 3 und die Vorspannkraft der Druckfeder 10, vergrößert sich das Volumen des Dämpfungsdruckraums 9, während sich gleichzeitig der Druck des Hydraulikmittels im Dämpfungsdruckraum 9 verringert. Wie bei herkömmlichen Spannvorrichtungen öffnet das Rückschlagventil 6 zum Hydraulikkreislauf sobald der Druck des Hydraulikmittels im Dämpfungsdruckraum 9 unter dem am ersten Rückschlagventil 6 anliegenden Druck des Hydraulikmittels aus dem Hydraulikkreislauf abzüglich der Vorspannkraft des ersten Rückschlagventils 6 zum Andrücken des Ventilkörpers gegen den zugehörigen Ventilsitz fällt. Sobald das erste Rückschlagventil 6 öffnet, strömt über die Anschlüsse 8 und die Fluidkanäle 7 der Hydraulikmittelversorgung sowie das erste Rückschlagventil 6 Hydraulikmittel in den Dämpfungsdruckraum 9 ein um die Volumenzunahme des Druckraums 9 mit Hydraulikmittel zu füllen.

Zusätzlich zu der Hydraulikmittelversorgung herkömmlicher Spannvorrichtungen ermöglicht die erfindungsgemäße hydraulische Spannvorrichtung 1 zeitlich vor oder gleichzeitig mit der Befüllung des Dämpfungsdruckraums 9 aus dem Hydraulikmittelkreis ein Nachströmen von Hydraulikmittel aus dem Zwischenspeicherraum 11. Bei einer Druckreduzierung im Dämpfungsdruckraum 9 durch die Volumenvergrößerung bei der Ausfahrbewegung des Spannkolbens 3 öffnet das zweite Rückschlagventil 12 gegen die Vorspannung des Ventilkörpers und ermöglicht ein Nachströmen von Hydraulikmittel aus dem Zwischenspeicherraum 11, in dem ein Teil des zur Dämpfung der vorhergehenden Einfahrbewegung des Spannkolbens 3 über den Bypass 14 abgeströmten Hydraulikmittels aus dem Zwischenspeicherraum 11 wieder in den Dämpfungsdruckraum 9 zurückströmt. Dadurch reduziert sich der Bedarf der erfindungsgemäßen hydraulischen Spannvorrichtung 1 an neuem aus dem Hydraulikkreislauf zugeführten Hydraulikmittel.

Je nach Abstimmung des Ansprechverhaltens des ersten Rückschlagventils 6 und des zweiten Rückschlagventils 12 sowie des Querschnitts des Bypasses 14 und der Entlüftungsbohrung 15 lässt sich der Neubedarf an Hydraulikmittel minimieren oder das Versorgungsvolumen des Dämpfungsdruckraums 9 maximieren. Da der Leckstrom des Hydraulikmittels aus der Entlüftungsbohrung 15 in der erfindungsgemäßen Ausgestaltung der hydraulischen Spannvorrichtung 1 im Wesentlichen unabhängig von der Dämpfungswirkung des Dämpfungsdruckraums 9 ist, lässt sich der Leckstrom auf ein für die Entlüftung der Spannvorrichtung 1 notwendiges Maß reduzieren. Durch den Zwischenspeicherraum 11 steht bei einer Ausrückbewegung des Spannkolbens 3 ein größeres Volumen an Hydraulikmittel bereit, um die Volumenvergrößerung des Dämpfungsdruckraums 9 auszugleichen, wobei das Zuströmen des Hydraulikmittels über zwei Rückschlagventile 6, 12 ein schnelleres Befüllen des Dämpfungsdruckraums 9 ermöglicht. Je nach Abstimmung der Ventileigenschaften des ersten Rückschlagventils 6 und des zweiten Rückschlagventils 12 kann der Neubedarf an Hydraulikmittel minimiert und/oder das Versorgungsvolumen an Hydraulikmittel maximiert werden, entsprechend die Reaktionsgeschwindigkeit der erfindungsgemäßen Spannvorrichtung 1 verbessert werden. Durch die Verlagerung der bei der hydraulischen Dämpfung der Einfahrbewegung des Spannkolbens 3 in die Kolbenbohrung 4 des Gehäuses 2 über den Bypass 14 verdrängte Menge an Hydraulikmittel in den Zwischenspeicherraum 11 geht bei der erfindungsgemäßen Spannvorrichtung 1 die zur Dämpfung benötigte Menge des Hydraulikmittels nicht als Leckstrom verloren, sondern wird im Wesentlichen in den Zwischenspeicherraum 11 verlagert. Aus diesem Zwischenspeicherraum 11 kann das Hydraulikmittel bei einer folgenden Ausrückbewegung des Spannkolbens 3 wieder zum Druck- und Volumenausgleich des Dämpfungsdruckraums 9 verwendet werden, indem es über das zweite Rückschlagventil 12 wieder in den Dämpfungsdrückraum 9 hinein strömt. Diese Funktionsweise ermöglicht neben einem reduzierten Bedarf an über den Hydraulikanschluss und das erste Rückschlagventil 6 aus dem Hydraulikkreislauf einströmenden neuen Hydraulikmittel auch eine sehr schnelle Versorgung des Dämpfungsdruckraums 9 mit einer ausreichenden Menge an Hydraulikmittel bei einer kurzen Ansprechzeit. Dies ermöglicht insbesondere auch bei dynamisch hochbelasteten hydraulischen Spannvorrichtungen 1 eine sichere Dämpfungsfunktion bei einem gleichzeitig reduzierten Bedarf an Hydraulikmittel.

## Patentansprüche

1. Hydraulische Spannvorrichtung (1) für ein flexibles Antriebsmittel, insbesondere ein Kettenspanner für einen Verbrennungsmotor, mit einem Gehäuse (2), einem in einer Kolbenbohrung (4) des Gehäuses (2) geführten hohlzylindrischen Spannkolben (3), einem von der Kolbenbohrung (4) und dem Spannkolben (3) begrenzten Dämpfungsdruckraum (9), einer Hydraulikmittelversorgung die an einen externen Hydraulikmittelkreis anschließbar ist, einem zwischen der Hydraulikmittelversorgung und dem Dämpfungsdruckraum (9) angeordneten ersten Rückschlagventil (6), das in Richtung des Dämpfungsdruckraums (9) öffnet und einer Entlüftungseinrichtung,
**dadurch gekennzeichnet, dass** zwischen dem Dämpfungsdruckraum (9) und der Entlüftungseinrichtung ein Zwischenspeicherraum (11) vorgesehen ist und ein zweites Rückschlagventil (12) zwischen dem Dämpfungsdruckraum (9) und dem Zwischenspeicherraum (11) angeordnet ist, das in Richtung des Dämpfungsdruckraums (9) öffnet, wobei der Zwischenspeicherraum (11) weiter mittels einer hydraulischen Verbindung mit dem Dämpfungsdruckraum (9) verbunden ist.

2. Spannvorrichtung (1) nach Anspruch 1,
**dadurch gekennzeichnet, dass** die hydraulische Verbindung zwischen dem Dämpfungsdruckraum (9) und dem Zwischenspeicherraum (11) als ein Bypass (14) zum zweiten Rückschlagventil (12) ausgebildet ist.

3. Spannvorrichtung (1) nach Anspruch 1 oder 2,
**dadurch gekennzeichnet, dass** die Entlüftungseinrichtung als Entlüftungsbohrung (15) im spannseitigen Ende des hohlzylindrischen Spannkolbens (3) ausgebildet ist und der Zwischenspeicherraum (11) im spannseitigen Ende des hohlzylindrischen Spannkolbens (3) angeordnet ist.

4. Spannvorrichtung (1) nach Anspruch 3,
**dadurch gekennzeichnet, dass** zwischen dem Zwischenspeicherraum (11) im spannseitigen Ende des hohlzylindrischen Spannkolbens (3) und dem Dämpfungsdruckraum (9) im Spannkolben (3) ein Sitz (13) zum Aufnehmen des zweiten Rückschlagventils (12) vorgesehen ist.

5. Spannvorrichtung (1) nach einem der Ansprüche 1 bis 4,
**dadurch gekennzeichnet, dass** im Boden der Kolbenbohrung (4) des Gehäuses (2) ein Sitz (5) zum Aufnehmen des ersten Rückschlagventils (6) vorgesehen ist.

6. Spannvorrichtung (1) nach Anspruch 4 oder 5,
**dadurch gekennzeichnet, dass** zum Vorspannen des Spannkolbens (3) eine Druckfeder (10) vorgesehen ist, die zumindest teilweise im hohlzylindrischen Spannkolben (3) angeordnet ist, wobei die Druckfeder (10) das erste Rückschlagventil (6) gegen den Sitz (5) im Gehäuse (2) drückt und/oder das zweite Rückschlagventil (12) gegen den Sitz (13) im Spannkolben (3) drückt.

7. Spannvorrichtung (1) nach einem der Ansprüche 3 bis 6,
**dadurch gekennzeichnet, dass** die Entlüftungsbohrung (15) stirnseitig am spannseitigen Ende des Spannkolbens (3) angeordnet ist.

8. Spannvorrichtung (1) nach einem der Ansprüche 3 bis 7,
**dadurch gekennzeichnet, dass** im Spannkolben (3) vor der Entlüftungsbohrung (15) eine Leckstrombegrenzungseinrichtung vorgesehen ist.

9. Spannvorrichtung (1) nach einem der Ansprüche 1 bis 8,
**dadurch gekennzeichnet, dass** zwischen dem Spannkolben (3) und der Kolbenbohrung (4) des Gehäuses (2) eine Hydraulikmitteldichtung vorgesehen ist.

10. Spannvorrichtung (1) nach einem der Ansprüche 1 bis 9,
**dadurch gekennzeichnet, dass** die Hydraulikmittelversorgung einen Anschluss (8) zu dem externen Hydraulikmittelkreis und einen Hydraulikmittelkanal (7) oder Hydraulikmittelraum zur Verbindung des Anschlusses (8) mit dem ersten Rückschlagventil (6) aufweist.

11. Spannvorrichtung (1) nach einem der Ansprüche 1 bis 10,
**dadurch gekennzeichnet, dass** die Spannvorrichtung (1) als Einschraubspanner ausgebildet ist, wobei das Gehäuse (2) am Außenumfang ein Gewinde (17) zum Montieren der Spannvorrichtung (1) aufweist.

## Claims

1. Hydraulic tensioning device (1) for a flexible driving means, and in particular a chain tensioner for an internal combustion engine, having a housing (2), a hollow cylindrical tensioning piston (3) which is guided in a piston bore (4) in the housing (2), a chamber (9) for damping pressure which is bounded by the piston bore (4) and the tensioning piston (3), a supply of hydraulic medium which can be connected to an external hydraulic medium circuit, a first non-return valve (6) which is arranged between the supply of hydraulic medium and the chamber (9) for damping pressure and which opens in the direction leading to the chamber (9) for damping pressure, and a venting means, **characterised in that** a buffer storage chamber (11) is provided between the chamber (9) for damping pressure and the venting means, and between the chamber (9) for damping pressure and the buffer storage chamber (11) there is arranged a second non-return valve (12) which opens in the direction leading to the chamber (9) for damping pressure, the buffer storage chamber (11) also being connected to the chamber (9) for damping pressure by means of a hydraulic connection.

2. Tensioning device (1) according to claim 1, **characterised in that** the hydraulic connection between the chamber (9) for damping pressure and the buffer storage chamber (11) takes the form of a bypass (14) bypassing the second non-return valve (12).

3. Tensioning device (1) according to claim 1 or 2, **characterised in that** the venting means takes the form of a venting bore (15) in the tensioning end of the hollow cylindrical tensioning piston (3) and the buffer storage chamber (11) is arranged in the tensioning end of the hollow cylindrical tensioning piston (3).

4. Tensioning device (1) according to claim 3, **characterised in that** a seating (13) to receive the second non-return valve (12) is provided between the buffer storage chamber (11) in the tensioning end of the hollow cylindrical tensioning piston (3) and the chamber (9) for damping pressure in the tensioning piston (3).

5. Tensioning device (1) according to one of claims 1 to 4, **characterised in that** a seating (5) to receive the first non-return valve (6) is provided in the end-wall of the piston bore (4) in the housing (2).

6. Tensioning device (1) according to claim 4 or 5, **characterised in that**, to pre-load the tensioning piston (3), there is provided a compression spring (10) of which at least part is arranged in the hollow cylindrical tensioning piston (3), the compression spring (10) pushing the first non-return valve (6) against the seating (5) in the housing (2) and/or pressing the second non-return valve (12) against the seating (13) in the tensioning piston (3).

7. Tensioning device (1) according to one of claims 3 to 6, **characterised in that** the venting bore (15) is arranged in the end-face at the tensioning end of the tensioning piston (3).

8. Tensioning device (1) according to one of claims 3 to 7, **characterised in that** a means of limiting leakage flow is provided in the tensioning piston (3), upstream of the venting bore (15).

9. Tensioning device (1) according to one of claims 1 to 8, **characterised in that** a seal for hydraulic medium is provided between the tensioning piston (3) and the piston bore (4) in the housing (2).

10. Tensioning device (1) according to one of claims 1 to 9, **characterised in that** the supply of hydraulic medium has a connection (8) to the external circuit for hydraulic medium, and a passage (7) for hydraulic medium or a chamber for hydraulic medium to connect the connection (8) to the first non-return valve (6)

11. Tensioning device (1) according to one of claims 1 to 10, **characterised in that** the tensioning device (1) takes the form of a screw-in tensioner, the housing (2) having in its outer circumference a thread (17) to allow the tensioning device (1) to be fitted.

## Revendications

1. Dispositif de serrage hydraulique (1) pour un moyen d'entraînement flexible, en particulier un tendeur de chaîne pour un moteur à combustion, comportant un boîtier (2), un piston de serrage cylindrique creux (3) guidé dans un alésage de piston (4) du boîtier (2), un compartiment pressurisé d'amortissement (9) délimité par l'alésage de piston (4) et le piston de serrage (3), une alimentation de fluide hydraulique qui peut être connectée à un circuit de fluide hydraulique externe, une premier clapet anti-retour (6) agencé entre l'alimentation de fluide hydraulique et le compartiment pressurisé d'amortissement (9), qui s'ouvre en direction du compartiment pressurisé d'amortissement (9), et un dispositif de purge d'air,
**caractérisé en ce qu'**un compartiment de stockage intermédiaire (11) est pourvu entre le compartiment pressurisé d'amortissement (9) et le dispositif de purge d'air et **en ce qu'**un deuxième clapet anti-retour (12) qui s'ouvre en direction du compartiment pressurisé d'amortissement (9) est agencé entre le compartiment pressurisé d'amortissement (9) et le compartiment de stockage intermédiaire (11), moyennant quoi le compartiment de stockage intermédiaire (11) est en outre connecté au compartiment pressurisé d'amortissement (9) à l'aide d'une connexion hydraulique.

2. Dispositif de serrage (1) selon la revendication 1,
**caractérisé en ce que** la connexion hydraulique entre le compartiment pressurisé d'amortissement (9) et le compartiment de stockage intermédiaire (11) est constitué comme une dérivation (14) vers le deuxième clapet anti-retour (12).

3. Dispositif de serrage (1) selon la revendication 1 ou 2,
**caractérisé en ce que** le dispositif de purge d'air est constitué comme un trou de purge d'air (15) à l'extrémité de serrage du piston de serrage cylindrique creux (3) et **en ce que** le compartiment de stockage intermédiaire (11) est agencé dans l'extrémité de serrage du piston de serrage cylindrique creux (3).

4. Dispositif de serrage (1) selon la revendication 3,
**caractérisé en ce qu'**un siège (13) recevant le deuxième clapet anti-retour (12) est pourvu entre le compartiment de stockage intermédiaire (11) dans l'extrémité de serrage du piston de serrage cylindrique creux (3) et le compartiment pressurisé d'amortissement (9) dans le piston de serrage (3).

5. Dispositif de serrage (1) selon l'une des revendications 1 à 4,
**caractérisé en ce qu'**un siège (5) recevant le premier clapet anti-retour (6) est pourvu dans le fond de l'alésage de piston (4) du boîtier (2).

6. Dispositif de serrage (1) selon la revendication 4 ou 5,
**caractérisé en ce qu'**un ressort de compression (10) agencé au moins partiellement dans le piston de serrage cylindrique creux (3) est pourvu pour précontraindre le piston de serrage (3), moyennant quoi le ressort de compression (10) pousse le premier clapet anti-retour (6) contre le siège (5) dans le boîtier (2) et/ou pousse le deuxième clapet anti-retour (12) contre le siège (13) dans le piston de serrage (3).

7. Dispositif de serrage (1) selon l'une des revendications 3 à 6,
**caractérisé en ce que** le trou de purge d'air (15) est agencé du côté avant de l'extrémité de serrage du piston de serrage (3).

8. Dispositif de serrage (1) selon l'une des revendications 3 à 7,
**caractérisé en ce qu'**un dispositif de limitation de débit de fuite est pourvu pour le trou de purge d'air (15) dans le piston de serrage (3).

9. Dispositif de serrage (1) selon l'une des revendications 1 à 8,
**caractérisé en ce qu'**une étanchéité pour le fluide hydraulique est pourvue entre le piston de serrage (3) et l'alésage de piston (4) du boîtier (2).

10. Dispositif de serrage (1) selon l'une des revendications 1 à 9,
**caractérisé en ce que** l'alimentation de fluide hydraulique comporte une connexion (8) pour le circuit de fluide hydraulique externe ainsi qu'un canal de fluide hydraulique (7) ou un compartiment de fluide hydraulique pour relier la connexion (8) avec le premier clapet anti-retour (6).

11. Dispositif de serrage (1) selon l'une des revendications 1 à 10,
**caractérisé en ce que** le dispositif de serrage (1) est constitué comme un tendeur à visser, dans lequel le boîtier (2) comporte sur sa périphérie externe un filetage (17) pour monter le dispositif de serrage (1).
